# EUROPEAN PATENT SPECIFICATION

(11) **EP 2 829 072 B1**
(45) Date of publication and mention of the grant of the patent: **17.02.2016**
(21) Application number: 13719239.9
(22) Date of filing: 07.03.2013
(51) Int. Cl.: G06F 21/16, H04N 21/85, H04N 21/235, H04N 21/236, H04N 21/434, H04N 21/435, H04N 21/835, H04N 21/8358

(54) **ENCRYPTION-RESISTANT WATERMARKING**
VERSCHLÜSSELUNGSSICHERES WASSERZEICHEN
FILIGRANE RÉSISTANT AU CHIFFREMENT

(30) Priority: 18.03.2012 IL 21870112; 15.10.2012 GB 201218406
(43) Date of publication of application: 28.01.2015
(73) Proprietor: NDS Limited, Staines, Middlesex TW18 4EX (GB)
(72) Inventor: MANTIN, Itsik, 6085000 Shoham (IL); SOMIN, Shahar, 7658806 Rehovot (IL)
(74) Representative: Abraham, Richard
(86) International application number: PCT/IB2013/051817
(87) International publication number: WO 2013/140289

(56) References cited:
- EP-A1- 1 684 496
- EP-A1- 2 204 979
- US-A1- 2005 257 059
- US-A1- 2011 188 700
- US-B1- 6 788 800

## Description

### FIELD OF THE INVENTION

The present invention relates generally to systems and methods for processing data, and specifically to encoding information into data content.

### BACKGROUND OF THE INVENTION

Media content transmitted over communication networks is generally subject to copyright. The copyright imposes strict legal limits on the ways in which subscribers are allowed to use the content that they receive from the network. For example, in addition to viewing video programs while they are broadcast, subscribers may be allowed to record the programs for their own use, but they are typically not permitted to distribute recorded copies of the programs. Notwithstanding these legal limitations, however, unauthorized copying and distribution of media content remains a major problem.

In order to identify unauthorized copies and possibly to detect their source, content distributors sometimes embed a digital watermark in each copy of encoded media data that they distribute. Such a watermark typically comprises encoded data that are added to digital content (such as audio, images, or video) in a manner that is difficult for unauthorized parties to detect or remove, but can readily be read out by an authorized party with the appropriate tools.

Various digital watermarking techniques are known in the art. For example, PCT International Publication WO 2010/143026 describes a method and system for embedding a watermark in block-encrypted content. The method includes encoding a bit string of n bits, denoted b₀ - bₙ₋₁, by translating each bit into a block of data, according to the following rule: If bᵢ = 1, then translate bᵢ into a block of data of a first type, and if bᵢ = 0, then translate bᵢ into a block of data of a second type, thereby translating the n bits into n blocks of data corresponding to each bit b₀ - bₙ₋₁. A composite block of data is arranged to include the n blocks of data and at least one additional block indicating the presence of the n blocks of data. The composite block of data is inserted into a content item as a watermark, wherein the watermarked content item is encrypted using an electronic code-book (ECB) mode of encryption.

### SUMMARY

Embodiments of the present invention that are described hereinbelow provide improved methods, apparatus and software for digital watermarking.

There is therefore provided, in accordance with an embodiment of the present invention, a method for processing data, which includes encoding a string of symbols, each having a respective symbol value, as a sequence of vectors. Each vector includes a respective number of repetitions of a sub-vector of a predefined length, such that the respective number of the repetitions in each vector in the sequence is indicative of the respective symbol value of a corresponding symbol in the string. A watermark is applied to an item of content including digital data by inserting the sequence of the vectors into the data.

The length of the sub-vector may be chosen to be an integer divisor of a block size of a block cipher that is to be applied to the item of content after application of the watermark thereto.

In some embodiments, inserting the sequence of the vectors includes interleaving the vectors with gaps of known lengths containing arbitrary data. At least two of the gaps may have different, respective lengths. Additionally or alternatively, at least two of the vectors include different, respective sub-vectors of the predefined length.

In a disclosed embodiment, the symbols include bits, and each of the vectors corresponding to a zero bit includes a first number of the repetitions, while each of the vectors corresponding to a one bit includes a second number of the repetitions, which is different from the first number.

In one embodiment, inserting the sequence includes inserting into the data, prior to the sequence of the vectors, a marker including a concatenation of a predetermined number of copies of a marker vector.

There is also provided, in accordance with an embodiment of the present invention, a method for processing data, which includes receiving ciphertext generated by applying a block cipher to an item of content including digital data to which a watermark has been applied by encoding a string of symbols, each having a respective symbol value, as a sequence of vectors, each vector including a respective number of repetitions of a sub-vector of a predefined length, such that the respective number of the repetitions in each vector in the sequence is indicative of the respective symbol value of a corresponding symbol in the string, and inserting the sequence of the vectors into the digital data. The ciphertext is analyzed to extract the watermark.

In a disclosed embodiment, analyzing the ciphertext includes identifying and counting recurrences of patterns occurring in the ciphertext, and decoding each of the symbols in the string based on a respective count of the recurrences in the ciphertext.

There is additionally provided, in accordance with an embodiment of the present invention, apparatus for processing data, including a memory, configured to hold a string of symbols, each having a respective symbol value. A processor is configured to encode the string of the symbols as a sequence of vectors. Each vector includes a respective number of repetitions of a sub-vector of a predefined length, such that the respective number of the repetitions in each vector in the sequence is indicative of the respective symbol value of a corresponding symbol in the string. The processor is configured to apply a watermark to an item of content including digital data by inserting the sequence of the vectors into the data.

There is further provided, in accordance with an embodiment of the present invention, apparatus for processing data, including an interface, which is coupled to receive ciphertext generated by applying a block cipher to an item of content including digital data to which a watermark has been applied by encoding a string of symbols, each having a respective symbol value, as a sequence of vectors, each vector including a respective number of repetitions of a sub-vector of a predefined length, such that the respective number of the repetitions in each vector in the sequence is indicative of the respective symbol value of a corresponding symbol in the string, and inserting the sequence of the vectors into the digital data. A processor is configured to analyze the ciphertext in order to extract the watermark.

There is moreover provided, in accordance with an embodiment of the present invention, a computer software product, including a computer-readable medium in which program instructions are stored, which instructions, when read by a computer, cause the computer to encode a string of symbols, each having a respective symbol value, as a sequence of vectors, each vector including a respective number of repetitions of a sub-vector of a predefined length, such that the respective number of the repetitions in each vector in the sequence is indicative of the respective symbol value of a corresponding symbol in the string, and cause the computer to apply a watermark to an item of content including digital data by inserting the sequence of the vectors into the data.

There is furthermore provided, in accordance with an embodiment of the present invention, a computer software product, including a computer-readable medium in which program instructions are stored, which instructions, when read by a computer, cause the computer to receive ciphertext generated by applying a block cipher to an item of content including digital data to which a watermark has been applied by encoding a string of symbols, each having a respective symbol value, as a sequence of vectors, each vector including a respective number of repetitions of a sub-vector of a predefined length, such that the respective number of the repetitions in each vector in the sequence is indicative of the respective symbol value of a corresponding symbol in the string, and inserting the sequence of the vectors into the digital data, and to analyze the ciphertext in order to extract the watermark.

The present invention will be more fully understood from the following detailed description of the embodiments thereof, taken together with the drawings in which:

### BRIEF DESCRIPTION OF THE DRAWINGS

Fig. 1 is a block diagram that schematically illustrates a media distribution system, in accordance with an embodiment of the present invention;
Fig. 2 is a block diagram that schematically shows functional details of elements of a media distribution system, in accordance with an embodiment of the present invention;
Fig. 3 is a block diagram that schematically illustrates a method for insertion of a digital watermark into a signal, in accordance with an embodiment of the present invention; and
Fig. 4 is a flow chart that schematically illustrates a method for extracting a digital watermark from a signal, in accordance with an embodiment of the present invention.

### DETAILED DESCRIPTION OF EMBODIMENTS

### OVERVIEW

After applying watermarks to items of digital content, a content distributor may subsequently wish to inspect communication traffic in order to detect these watermarks, so as to identify unauthorized copies of content items and the source of these copies. Frequently, however, communication traffic is encrypted, and it becomes difficult or impossible to detect the watermarks without first decrypting the traffic. The content distributor, however, may not have access to the necessary decryption key.

Embodiments of the present invention that are described hereinbelow can be used to address this sort of difficulty by providing a digital watermark that can be detected even in encrypted data, particularly when certain types of block ciphers are used for encryption. For example, when an electronic codebook (ECB) mode of block cipher encryption is used, each plaintext block is encrypted as a corresponding ciphertext block of the same size. In the embodiments described below, the watermark is encoded using repeating patterns of sub-vectors, whose length is chosen to be an integer divisor of the block size (and may be equal to the block size). These patterns are inserted into the plaintext, but their presence can then be detected in the blocks of the ciphertext, as well. The patterns are defined so that the watermark can be detected and decoded even when the vectors have been shifted relative to the block boundaries in the course of one or more rounds of encryption.

In the disclosed embodiments, a watermark comprises a string of symbols, which are encoded as a sequence of vectors. Each vector comprises a certain number of repetitions of a sub-vector of the appropriate, predefined length. The number of these repetitions in each vector in the sequence is indicative of the respective symbol value of the corresponding symbol in the string. In other words, a higher symbol value (such as 1, assuming each symbol is a single bit) may be mapped to a larger number of repetitions, while a lower symbol value (such as 0) is mapped to a smaller number, or vice *versa.* The sub-vectors may be chosen arbitrarily, with different sub-vectors repeated in different vectors, in order to make the watermark harder for unauthorized parties to detect (and consequently harder to remove or tamper with).

The encoded watermark is applied to an item of content by inserting the sequence of the vectors into the digital data of the content item. Typically, to make detection of the watermark still more difficult, the sequence of the vectors representing the watermark is interleaved with gaps of known lengths containing arbitrary data. These gaps may have different lengths, as long as the lengths are known to authorized watermark detectors. To facilitate authorized detection of the watermark, the sequence of the vectors may be preceded in the data by a marker generated by concatenating a predetermined number of copies of a marker vector.

To extract the watermark from ciphertext, the watermark detector identifies and counts recurring patterns that occur in the ciphertext. The number of recurrences of each pattern corresponds to the number of repetitions of a sub-vector in the plaintext watermark, even when the sub-vectors have been shifted relative to the block boundaries in the encryption process. Thus, each of the symbols in the string can be deciphered based on the respective count of the recurrences of the corresponding pattern in the ciphertext.

The term "encode" is used throughout the present specification and claims, in all of its grammatical forms, to refer to any type of conversion of data from one form to another that preserves the information content of the data. Such encoding make take the form, for example, of converting a string of symbols into a sequence of vectors, as described above. Other forms of encoding include data stream encoding, such as (but not limited to) MPEG-2 encoding, H.264 encoding, VC-1 encoding, and synthetic encodings such as Scalable Vector Graphics (SVG) and LASER (ISO/IEC 14496-20), and so forth. Any recipient of encoded data who is cognizant of the encoding scheme, whether or not the recipient of the encoded data is the intended recipient, is, at least in potential, able to read the encoded data. It is appreciated that encoding may be performed in several stages and may include a number of different processes, including, but not necessarily limited to: compressing the data; transforming the data into other forms; and making the data more robust (for instance replicating the data or using error correction mechanisms).

Similarly, the term "decode" is used throughout the present specification and claims, in all its grammatical forms, to refer to the reverse of "encoding."

The terms "cipher" and "encrypt," in all of their grammatical forms, are used interchangeably throughout the present specification and claims to refer to any appropriate method for encoding data in such a way as to make it unintelligible except to intended recipients. Well-known types of ciphering or encrypting include, for example, block and stream ciphers, as well as methods such as DES, 3DES, and AES. Similarly, the terms "decipher" and "decrypt" are used throughout the present specification and claims, in all their grammatical forms, to refer to the reverse of "ciphering" and "encrypting."

### SYSTEM DESCRIPTION

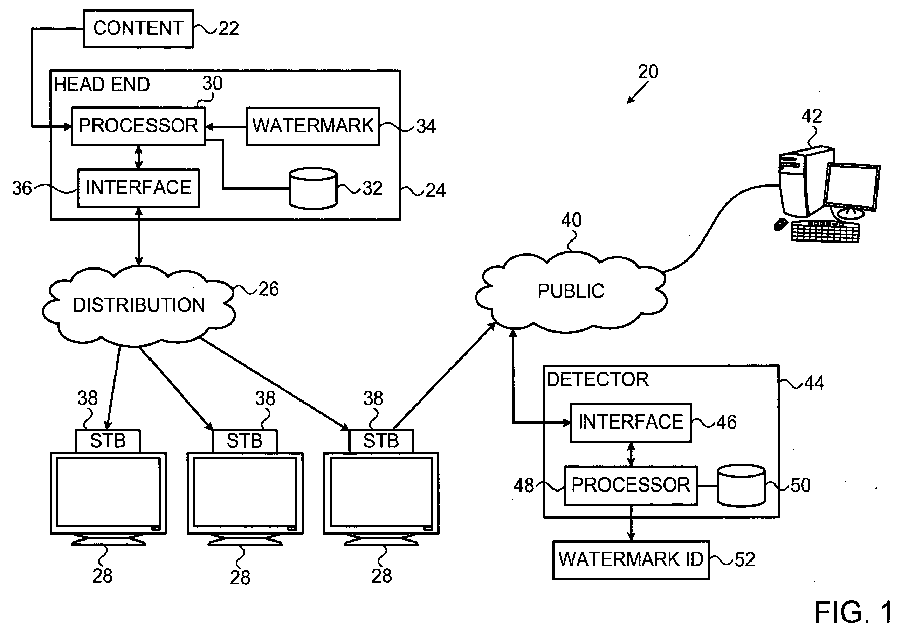

Fig. 1 is a block diagram that schematically illustrates a content distribution system 20, in accordance with an embodiment of the present invention. For the sake of clarity and convenience, the content distributed within system 20 will be assumed to be video programs, but the principles of the present invention may similarly be applied to substantially any type of digital media, such as test, images or audio media. A head-end 24 transmits content 22 via a distribution network 26 to multiple subscribers. The distribution network may comprise, for example, a cable entertainment network, a satellite network, a packet network (such as wired and/or wireless Internet), or any other suitable type of data communication network that is known in the art. Head-end 24 typically transmits the content to each subscriber in the form of encoded video, such as a stream encoded in accordance with H.264 or any other applicable digital standard.

Each subscriber receives the encoded content in a decoding device 38, such as a television set-top box (STB), which decodes the video content in order to output a series of video image frames to a television monitor 28. Alternatively, decoding devices 38 may comprise any suitable sort of video decoder and may be implemented either as freestanding units, as shown in the figure, or in the form of embedded processing circuitry within a display device, such as a computer, entertainment console, or mobile media player.

Video decoding devices 38 in system 20 generally output standard digital video signals, which may be input to any sort of standard display device (such as monitors 28) or to a video recorder. Once the content has been recorded in this manner, it may be difficult or impossible, despite legal constraints, to prevent subscribers from distributing digital copies of the content. For example, the user of one of devices 38 may forward unauthorized copies via a public network 40, such as the Internet, to other computers 42. (Although networks 26 and 40 are shown in Fig. 1, for the sake of conceptual clarity, as separate entities, in practice the same network, such as the Internet, may be used for both legitimate content distribution and distribution of unauthorized copies of content.)

To enable this sort of unauthorized copying to be tracked, head-end 24 adds a watermark 34 to content 22. The watermark typically comprises a string of symbols, such as a word of eight bits or more, which identifies a subscriber or group of subscribers that are to receive the content. The watermarking operation, which is described in detail hereinbelow, is typically carried out by a general-purpose computer, comprising a programmable processor 30, with a memory 32 for holding watermark data and an interface 36 to network 26. The processor is programmed in software to carry out the functions that are described herein (and may also carry out other functions in the general context of operation of head-end 24). This software may be downloaded to processor 30 in electronic form, over a network, for example. Alternatively or additionally, the software may be stored in tangible media, such as optical, magnetic, or electronic memory media, possibly in memory 32. Further alternatively or additionally, at least some of the watermarking functions of processor 30 may be implemented in dedicated or programmable hardware logic.

A copy detector 44 is coupled to network 40 and analyzes data content transmitted over the network in order to capture and identify unauthorized copies of content 22. Detector 44 may, for example, comprise a general-purpose computer, with an interface 46 to network 40 and a processor 48 (with a memory 50) for extracting encoded watermark data from intercepted content items, as described in greater detail hereinbelow. Processor 48 typically runs under the control of suitable software, which may be downloaded and/or stored as described above, possibly with hardware processing support, as well. After analyzing an item of content, processor 48 outputs a watermark identifier 52, which may then be associated with watermark 34 in order to identify the source of an unauthorized copy.

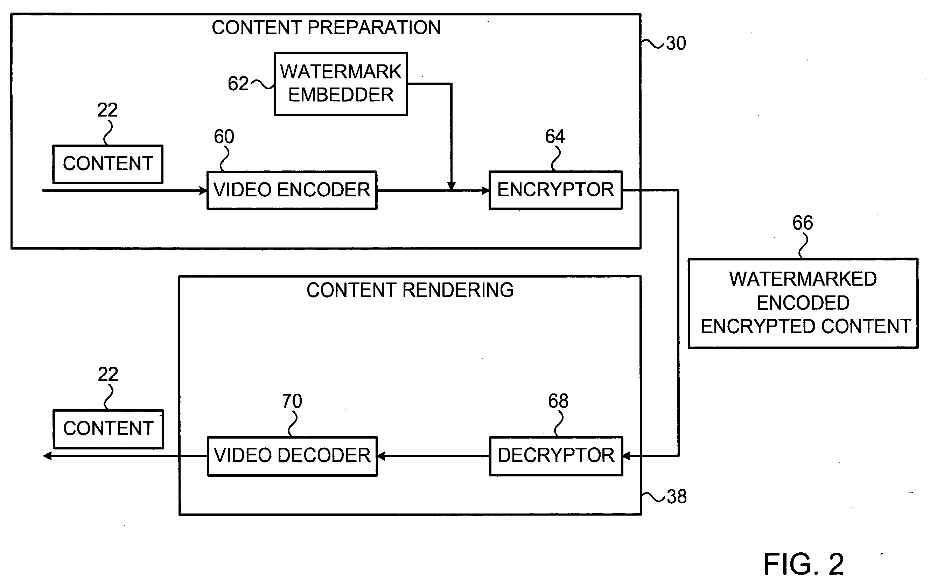

Fig. 2 is a block diagram that schematically shows functional details of head-end 24 and decoding device 38, in accordance with an embodiment of the present invention. The content preparation functions of the head-end that are shown in Fig. 2 are carried out, in this example, by processor 30, and the functional blocks in the upper part of the figure can be implemented as software processes running on the processor. A video encoder 60 receives content 22 and generates a stream of encoded video, typically in accordance with a predefined standard, such as the Motion Picture Expert Group (MPEG) standards. Such a stream is also referred to herein as a "signal." A watermark embedder 62 generates an encoded watermark, representing a predefined string of symbols, as explained above, and embeds the encoded watermark in the signal. The signal with the added watermark is referred to herein as a "carrying signal."

Embedder 62 typically inserts the encoded watermark in a location in the signal that will be ignored by standard parsers of the carrying signal, as in decoding device 38. For example, when the signal complies with some standard that has hooks for proprietary extensions (such as the user data section in MPEG streams), the encoded watermark can be placed in the proprietary extension to avoid parsing failure by standard decoders.

Typically, for data security, an encryptor 64 encrypts the carrying signal before transmission, using any suitable method of encryption that is known in the art. Head-end 24 thus outputs watermarked, encoded, encrypted content 66 to distribution network 26. Encryption is optional, however, in embodiments of the present invention, and the head-end may thus output watermarked, encoded content without encryption. On the other hand, encoded content may subsequently be encrypted and re-transmitted in encrypted form by users (possibly in violation of the content owner's copyright). The watermark inserted in the content by embedder 62 can be detected even in such encrypted content, as described hereinbelow, without requiring that the content be decrypted.

Decoding device 38 receives content 66, and applies a suitable decryptor 68 to recover the watermarked, encoded carrying signal. To render the content as a stream of video images, a video decoder 70 in device, such as a suitable MPEG decoder, converts the signal into image frames for output to monitor 28. As noted earlier, decoder 70 will typically ignore the watermark (in the user data section or elsewhere in the carrying signal). If the user of device 38 makes a copy of the decrypted carrying signal, however, the watermark will be preserved in this copy. If the user then distributes such a copy, the watermark will be detectable by detector 44.

### WATERMARKING AND DETECTION SCHEMES

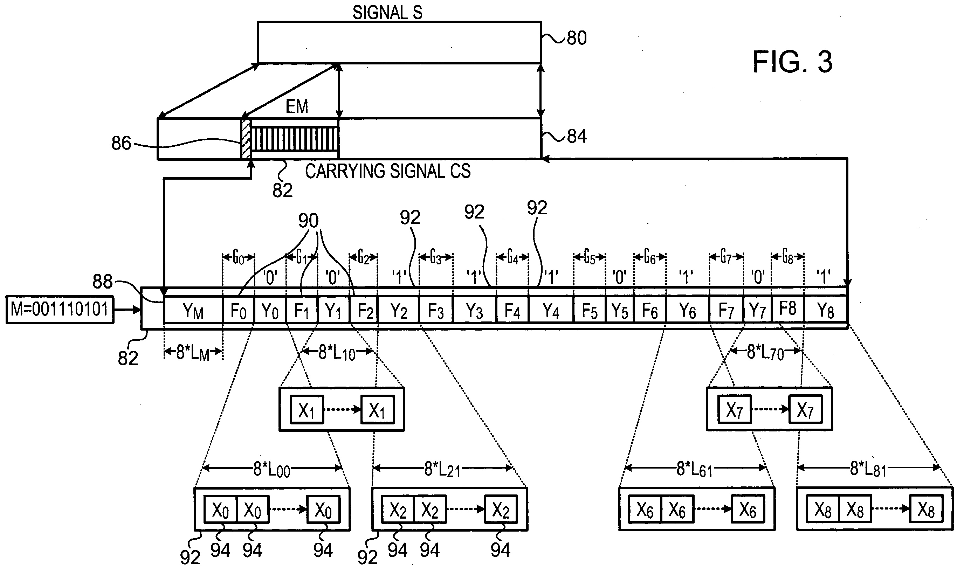

Fig. 3 is a block diagram that schematically illustrates insertion of an encoded watermark 82 into a signal 80, such as a MPEG stream, in accordance with an embodiment of the present invention. This sort of scheme may be implemented by watermark embedder 62, for instance. Watermark 82 encodes the symbol stream of digital watermark 34, which is represented in Fig. 3, by way of example, as the bit string M = 001110101.... (A nine-bit watermark is shown here for the sake of illustration, but longer or shorter strings may alternatively be used.) As noted earlier, encoded watermark 82 is embedded in carrier signal 84 in a location selected so as to be ignored by standard parsers. An extension header 86 may precede watermark 82 in this location for purposes of protocol identification.

Encoded watermark 82 may optionally begin with a marker 88 to aid authorized detectors 44 in locating the embedded watermark. The marker may be generated as follows:
- Choose an arbitrary eight-byte marker vector X_{M}. For example, X_{M} may be a random vector, a zero vector, or a vector of any other sort of bit distribution that will make the vector itself hard to detect by an unauthorized party.
- Marker 88 comprises a vector Y_{M}, which is constructed by concatenating X_{M} L_{M} times (wherein L_{M} is a predefined parameter).
The marker vector X_{M} (and likewise sub-vectors Xᵢ, as defined below) is chosen to be eight bytes long on the assumption that block ciphers that may later be applied to carrier signal 84 will use blocks of eight or sixteen bytes for encryption. Thus, the length of the marker vector is an integer divisor of the block length, with a quotient of one or two in this case. Alternatively, other vector lengths satisfying this criterion may be used. Although the length values of eight and sixteen bytes are used in the present description for the sake of convenience, other suitable values may alternatively be chosen, depending, *inter alia,* on the block length of ciphers that are expected to be applied to the watermarked content.

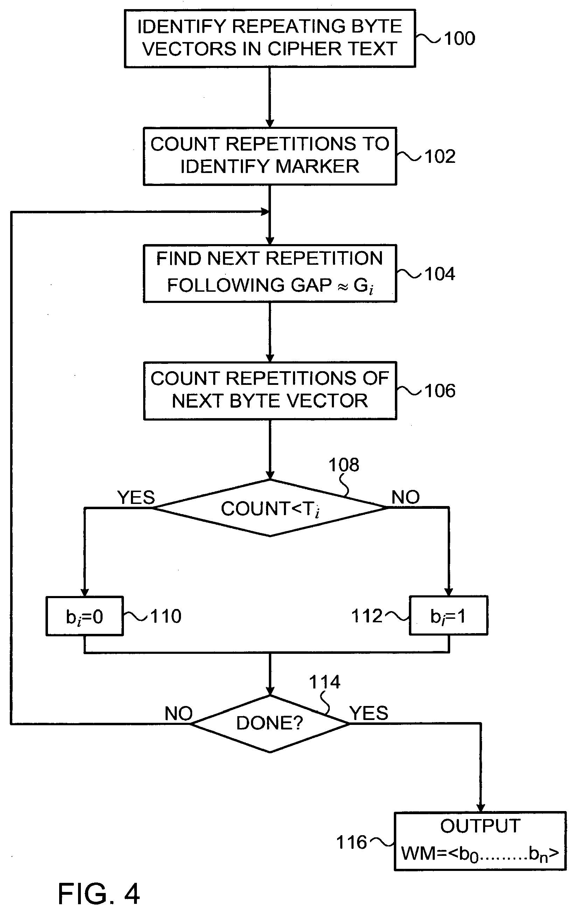

Following marker 88, encoded watermark 82 comprises gaps 90, containing arbitrary data Fᵢ, interleaved with vectors Yᵢ 92 that encode respective bits bᵢ in the string of watermark 34. For every bit bᵢ, from b₀ to bₙ, the watermark is constructed as follows:
- Choose a length Gᵢ of gap 90 that is to be interleaved before encoding this bit. Fill this gap 90 with arbitrary data Fᵢ. It is desirable that the data in the gap not include repetitions, in order to avoid confusion in the watermark extraction process, which relies on such repetitions (Fig. 4). The gap length Gᵢ may vary from bit to bit as long as these lengths are pre-agreed between embedder 62 and detector 44.
- Choose an eight-byte sub-vector Xᵢ, of any suitable form. For example, Xᵢ may be a random vector, a zero vector, or a vector of any other distribution that will make it hard for unauthorized parties to detect watermark 82.
- Build vector Yᵢ 92 by repeating and concatenating Xᵢ L_{ibᵢ} times. L_{ibᵢ} takes the value Lᵢ₀ if bᵢ = 0, and Lᵢ₁ if bᵢ = 1. Lᵢ₀ and Lᵢ₁ are predefined integer numbers, which are chosen to be significantly different from one another and larger than the maximum expected number of rounds of encryption that will be applied to the encoded content. For the sake of convenience in the description that follows, we assume arbitrarily that Lᵢ₁ > Lᵢ₀.

The above process is repeated for all the bits of watermark 34. The resulting encoded watermark 82 thus comprises marker 88 followed by an interleaved sequence of gaps 90 and vectors 92: <Yₘ, F₀, Y₀, F₁, Y₁, F₂, Y₂, ...>.

Fig. 4 is a flow chart that schematically illustrates a method for extracting digital watermark 34 from a signal, in accordance with an embodiment of the present invention. This method is applied, for example, by detector 44 in order to extract the watermark from encoded, and possibly encrypted, content that is intercepted on network 40.

Processor 48 in detector 44 analyzes ciphertext of an intercepted digital signal in order to identify and locate possible repetitions of eight- and sixteen-byte vectors, in a ciphertext analysis step 100. Because each vector 92 in encoded watermark 82 contains multiple consecutive repetitions of identical sub-vectors, these repetitions will appear in the ciphertext even when vectors 92 have been shifted relative to the cipher block boundaries in the encryption process. Such repetitions occur by accident only rarely in the intercepted signals, and can thus reliably serve as indications of an embedded watermark.

Assuming the watermark encoding scheme includes a marker 88 (as shown in Fig. 3), processor 48 identifies the marker by counting repetitions of sixteen-byte vectors, at a marker identification step 102. A count that is equal to or slightly smaller than L_{M}/2 indicates the beginning of encoded watermark 82. (The count may be slightly smaller than L_{M}/2 because of loss of the initial and final marker vectors due to cipher block shift, as explained above.)

In order to extract the next bit bᵢ of the watermark 82, processor 48 finds the next sequence of repetitions of sixteen-byte vectors in the intercepted signal following a gap whose length is approximately equal to the known gap length Gᵢ, at a repetition finding step 104. The processor counts the repetitions in the sequence, which correspond to the vector Yᵢ, at a repetition counting step 106. The processor then compares this count to a threshold parameter Ti, at a threshold checking step 108. This threshold parameter is chosen such that Lᵢ₀ < Ti < Lᵢ₁ (assuming Lᵢ₀ < Lᵢ₁, as noted above). If the repetition count is less than Ti, processor 48 concludes that bᵢ=0, at a zero output step 110. Otherwise, the processor concludes that bᵢ=1, at a one output step 112.

Processor 48 checks whether it has decoded all the bits of the watermark, at a completion checking step 114. If not, the processor returns to step 104 in order to find the next gap and vector in the encoded watermark. When all the bits have been decoded, processor 48 outputs watermark identifier 52, comprising the extracted bit string <b₀, ..., bₙ>, at a watermark output step 116. This identifier should correspond precisely to the digital watermark 34 that was originally embedded in the content in question.

Although the embodiments described above are directed specifically to encoding and decoding of watermarks, the principles of the present invention may similarly be applied in encoding and embedding other sorts of digital symbol strings in a data signal. It will thus be appreciated that the embodiments described above are cited by way of example, and that the present invention is not limited to what has been particularly shown and described hereinabove. Rather, the scope of the present invention includes both combinations and subcombinations of the various features described hereinabove, as well as variations and modifications thereof which would occur to persons skilled in the art upon reading the foregoing description and which are not disclosed in the prior art.

## Claims

1. A method for processing data, comprising:
encoding a string of symbols, each having a respective symbol value, as a sequence of vectors, each vector comprising a respective number of repetitions of a sub-vector of a predefined length, such that the respective number of the repetitions in each vector in the sequence is indicative of the respective symbol value of a corresponding symbol in the string; and
applying a watermark to an item of content comprising digital data by inserting the sequence of the vectors into the data.

2. The method according to claim 1, wherein inserting the sequence of the vectors comprises interleaving the vectors with gaps of known lengths containing arbitrary data.

3. The method according to claim 2, wherein at least two of the gaps have different, respective lengths.

4. The method according to any of claims 1-3, wherein at least two of the vectors comprise different, respective sub-vectors of the predefined length.

5. The method according to any of claims 1-4, wherein the symbols comprise bits, and wherein each of the vectors corresponding to a zero bit comprises a first number of the repetitions, while each of the vectors corresponding to a one bit comprises a second number of the repetitions, which is different from the first number.

6. The method according to any of claims 1-5, wherein inserting the sequence comprises inserting into the data, prior to the sequence of the vectors, a marker comprising a concatenation of a predetermined number of copies of a marker vector.

7. The method according to any of claims 1-6, wherein the length of the sub-vector is chosen to be an integer divisor of a block size of a block cipher that is to be applied to the item of content after application of the watermark thereto.

8. A method for processing data, comprising:
receiving ciphertext generated by applying a block cipher to an item of content comprising digital data to which a watermark has been applied by encoding a string of symbols, each having a respective symbol value, as a sequence of vectors, each vector comprising a respective number of repetitions of a sub-vector of a predefined length, such that the respective number of the repetitions in each vector in the sequence is indicative of the respective symbol value of a corresponding symbol in the string, and inserting the sequence of the vectors into the digital data; and
analyzing the ciphertext to extract the watermark.

9. The method according to claim 8, wherein analyzing the ciphertext comprises:
identifying and counting recurrences of patterns occurring in the ciphertext; and
decoding each of the symbols in the string based on a respective count of the recurrences in the ciphertext.

10. Apparatus for processing data, comprising:
a memory, configured to hold a string of symbols, each having a respective symbol value; and
a processor, which is configured to encode the string of the symbols as a sequence of vectors, each vector comprising a respective number of repetitions of a sub-vector of a predefined length, such that the respective number of the repetitions in each vector in the sequence is indicative of the respective symbol value of a corresponding symbol in the string, and which is configured to apply a watermark to an item of content comprising digital data by inserting the sequence of the vectors into the data.

11. The apparatus according to claim 10, wherein inserting the sequence of the vectors comprises interleaving the vectors with gaps of known lengths containing arbitrary data.

12. The apparatus according to claim 11, wherein at least two of the gaps have different, respective lengths.

13. The apparatus according to any of claims 10-12, wherein at least two of the vectors comprise different, respective sub-vectors of the predefined length.

14. Apparatus for processing data, comprising:
an interface, which is coupled to receive ciphertext generated by applying a block cipher to an item of content comprising digital data to which a watermark has been applied by encoding a string of symbols, each having a respective symbol value, as a sequence of vectors, each vector comprising a respective number of repetitions of a sub-vector of a predefined length, such that the respective number of the repetitions in each vector in the sequence is indicative of the respective symbol value of a corresponding symbol in the string, and inserting the sequence of the vectors into the digital data; and
a processor, which is configured to analyze the ciphertext in order to extract the watermark.

15. The apparatus according to claim 14, wherein the detector is configured to analyze the ciphertext by identifying and counting recurrences of patterns occurring in the ciphertext, and decoding each of the symbols in the string based on a respective count of the recurrences in the ciphertext.

## Patentansprüche

1. Verfahren zum Verarbeiten von Daten, das Folgendes beinhaltet:
Codieren einer Folge von Symbolen, die jeweils einen jeweiligen Symbolwert haben, als eine Sequenz von Vektoren, wobei jeder Vektor eine jeweilige Anzahl von Wiederholungen eines Subvektors einer vorbestimmten Länge umfasst, so dass die jeweilige Anzahl der Wiederholungen in jedem Vektor in der Sequenz den jeweiligen Symbolwert eines entsprechenden Symbols in der Folge anzeigt; und
Aufbringen eines Wasserzeichens auf ein digitale Daten umfassendes Inhaltselement durch Einfügen der Sequenz der Vektoren in die Daten.

2. Verfahren nach Anspruch 1, wobei das Einfügen der Sequenz von Vektoren das Verschachteln der Vektoren mit Lücken bekannter Längen beinhaltet, die arbiträre Daten enthalten.

3. Verfahren nach Anspruch 2, wobei wenigstens zwei der Lücken unterschiedliche jeweilige Längen haben.

4. Verfahren nach einem der Ansprüche 1-3, wobei wenigstens zwei der Vektoren unterschiedliche jeweilige Subvektoren der vordefinierten Länge umfassen.

5. Verfahren nach einem der Ansprüche 1-4, wobei die Symbole Bits umfassen und wobei jeder der Vektoren, der einem Null-Bit entspricht, eine erste Anzahl der Wiederholungen umfasst, wobei jeder der Vektoren, der einem Eins-Bit entspricht, eine zweite Anzahl der Wiederholungen umfasst, die sich von der ersten Anzahl unterscheidet.

6. Verfahren nach einem der Ansprüche 1-5, wobei das Einfügen der Sequenz das Einfügen, vor der Sequenz der Vektoren, eines Markers in die Daten beinhaltet, der eine Verkettung einer vorbestimmten Anzahl von Kopien eines Markervektors umfasst.

7. Verfahren nach einem der Ansprüche 1-6, wobei die Länge des Subvektors so gewählt wird, dass er ein ganzzahliger Divisor einer Blockgröße eines Blockschlüssels ist, der nach dem Aufbringen des Wasserzeichens auf das Inhaltselement auf dieses aufgebracht werden soll.

8. Verfahren zum Verarbeiten von Daten, das Folgendes beinhaltet:
Empfangen von Schlüsseltext, erzeugt durch Anwenden eines Blockschlüssels auf ein digitale Daten umfassendes Inhaltselement, auf das ein Wasserzeichen durch Codieren einer Folge von Symbolen, die jeweils einen jeweiligen Symbolwert haben, als eine Sequenz von Vektoren aufgebracht wurde, wobei jeder Vektor eine jeweilige Anzahl von Wiederholungen eines Subvektors einer vordefinierten Länge umfasst, so dass die jeweilige Anzahl der Wiederholungen in jedem Vektor in der Sequenz den jeweiligen Symbolwert eines entsprechenden Symbols in der Folge anzeigt, und Einfügen der Sequenz der Vektoren in die digitalen Daten; und
Analysieren des Schlüsseltexts zum Extrahieren des Wasserzeichens.

9. Verfahren nach Anspruch 8, wobei das Analysieren des Schlüsseltexts Folgendes beinhaltet:
Identifizieren und Zählen von Rekurrenzen von in dem Schlüsseltext auftretenden Mustern; und
Decodieren jedes der Symbole in der Folge auf der Basis einer jeweiligen Anzahl der Rekurrenzen in dem Schlüsseltext.

10. Vorrichtung zum Verarbeiten von Daten, die Folgendes umfasst:
einen Speicher, konfiguriert zum Aufnehmen einer Folge von Symbolen, die jeweils einen jeweiligen Symbolwert haben; und
einen Prozessor, konfiguriert zum Codieren der Folge der Symbole als eine Sequenz von Vektoren, wobei jeder Vektor eine jeweilige Anzahl von Wiederholungen eines Subvektors einer vordefinierten Länge umfasst, so dass die jeweilige Anzahl der Wiederholungen in jedem Vektor in der Sequenz den jeweiligen Symbolwert eines entsprechenden Symbols in der Folge anzeigt, und konfiguriert zum Aufbringen eines Wasserzeichens auf ein digitale Daten umfassendes Inhaltselement durch Einfügen der Sequenz der Vektoren in die Daten.

11. Vorrichtung nach Anspruch 10, wobei das Einfügen der Sequenz der Vektoren das Verschachteln der Vektoren mit Lücken bekannter Längen beinhaltet, die arbiträre Daten enthalten.

12. Vorrichtung nach Anspruch 11, wobei wenigstens zwei der Lücken unterschiedliche jeweilige Längen haben.

13. Vorrichtung nach einem der Ansprüche 10-12, wobei wenigstens zwei der Vektoren unterschiedliche jeweilige Subvektoren der vordefinierten Länge umfassen.

14. Vorrichtung zum Verarbeiten von Daten, die Folgendes umfasst:
eine Schnittstelle, die so gekoppelt ist, dass sie Schlüsseltext empfängt, der durch Anwenden eines Blockschlüssels auf ein digitale Daten umfassenden Inhaltselements erzeugt wird, auf die ein Wasserzeichen durch Codieren einer Folge von Symbolen, die jeweils einen jeweiligen Symbolwert haben, als eine Sequenz von Vektoren aufgebracht wurde, wobei jeder Vektor eine jeweilige Anzahl von Wiederholungen eines Subvektors einer vordefinierten Länge hat, so dass die jeweilige Anzahl der Wiederholungen in jedem Vektor in der Sequenz den jeweiligen Symbolwert eines entsprechenden Symbols in der Folge anzeigt, und Einfügen der Sequenz der Vektoren in die digitalen Daten; und
einen Prozessor, der zum Analysieren des Schlüsseltexts konfiguriert ist, um das Wasserzeichen zu extrahieren.

15. Vorrichtung nach Anspruch 14, wobei der Detektor zum Analysieren des Schlüsseltexts durch Identifizieren und Zählen von Rekurrenzen von in dem Schlüsseltext auftretenden Mustern konfiguriert ist, und Decodieren jedes der Symbole in der Folge auf der Basis eines jeweiligen Anzahl der Rekurrenzen in dem Schlüsseltext.

## Revendications

1. Procédé de traitement de données, comprenant les opérations consistant à :
coder une chaîne de symboles, chacun ayant une valeur de symbole respective, en tant que séquence de vecteurs, chaque vecteur comprenant un nombre respectif de répétitions d'un sous-vecteur possédant une longueur prédéfinie, de sorte que le nombre respectif des répétitions dans chaque vecteur de la séquence indique la valeur de symbole respective d'un symbole correspondant dans la chaîne ; et
appliquer un filigrane à un élément de contenu comportant des données numériques grâce à l'insertion de la séquence des vecteurs dans les données.

2. Procédé selon la revendication 1, l'insertion de la séquence des vecteurs comprenant l'opération consistant à entrelacer les vecteurs avec des intervalles de longueurs connues contenant des données arbitraires.

3. Procédé selon la revendication 2, au moins deux des intervalles ayant des longueurs respectives différentes.

4. Procédé selon l'une quelconque des revendications 1 à 3, au moins deux des vecteurs comprenant des sous-vecteurs respectifs différents possédant la longueur prédéfinie.

5. Procédé selon l'une quelconque des revendications 1 à 4, les symboles comprenant des bits, et chacun des vecteurs qui correspond à un bit Zéro comprenant un premier nombre des répétitions, alors que chacun des vecteurs qui correspond à un bit Un comprend un deuxième nombre des répétitions lequel est différent du premier nombre.

6. Procédé selon l'une quelconque des revendications 1 à 5, l'insertion de la séquence comprenant l'insertion dans les données, avant la séquence des vecteurs, d'un marqueur comprenant une concaténation ayant un nombre prédéterminé de copies d'un vecteur marqueur.

7. Procédé selon l'une quelconque des revendications 1 à 6, la longueur du sous-vecteur étant choisie de façon à être un diviseur à nombre entier d'une taille de bloc pour un chiffrement par blocs qui est destiné à être appliqué à l'élément de contenu après l'application du filigrane à celui-ci.

8. Procédé de traitement de données, comprenant les opérations consistant à :
recevoir du texte chiffré généré grâce à l'application d'un chiffrement par blocs à un élément de contenu comprenant des données numériques auxquelles un filigrane a été appliqué suite au codage d'une chaîne de symboles, chacun ayant une valeur de symbole respective, en tant que séquence de vecteurs, chaque vecteur comprenant un nombre respectif de répétitions d'un sous-vecteur possédant une longueur prédéfinie, de sorte que le nombre respectif des répétitions dans chaque vecteur de la séquence indique la valeur de symbole respective d'un symbole correspondant dans la chaîne, et grâce à l'insertion de la séquence des vecteurs dans les données numériques ; et
analyser le texte chiffré pour extraire le filigrane.

9. Procédé selon la revendication 8, l'analyse du texte chiffré comprenant les opérations consistant à :
identifier et compter les récurrences de schémas se produisant dans le texte chiffré ; et
décoder chacun des symboles dans la chaîne, sur la base d'un comptage respectif des récurrences dans le texte chiffré.

10. Appareil de traitement de données, comprenant :
une mémoire laquelle est configurée de façon à conserver une chaîne de symboles, chacun ayant une valeur de symbole respective ; et
un processeur lequel est configuré de façon à coder la chaîne des symboles en tant que séquence de vecteurs, chaque vecteur comprenant un nombre respectif de répétitions d'un sous-vecteur possédant une longueur prédéfinie, de sorte que le nombre respectif des répétitions dans chaque vecteur de la séquence indique la valeur de symbole respective d'un symbole correspondant dans la chaîne, et qui est configuré de façon à appliquer un filigrane à un élément de contenu comprenant des données numériques grâce à l'insertion de la séquence des vecteurs dans les données.

11. Appareil selon la revendication 10, l'insertion de la séquence des vecteurs comprenant l'opération consistant à entrelacer les vecteurs avec des intervalles de longueurs connues contenant des données arbitraires.

12. Appareil selon la revendication 11, au moins deux des intervalles ayant des longueurs respectives différentes.

13. Appareil selon l'une quelconque des revendications 10 à 12, au moins deux des vecteurs comprenant des sous-vecteurs respectifs différents possédant la longueur prédéfinie.

14. Appareil de traitement de données, comprenant :
une interface, qui est couplée de façon à recevoir du texte chiffré généré grâce à l'application d'un chiffrement par blocs à un élément de contenu comprenant des données numériques auxquelles un filigrane a été appliqué suite au codage d'une chaîne de symboles, chacun ayant une valeur de symbole respective, en tant que séquence de vecteurs, chaque vecteur comprenant un nombre respectif de répétitions d'un sous-vecteur possédant une longueur prédéfinie, de sorte que le nombre respectif des répétitions dans chaque vecteur de la séquence indique la valeur de symbole respective d'un symbole correspondant dans la chaîne, et grâce à l'insertion de la séquence des vecteurs dans les données numériques ; et
un processeur, qui est configuré de façon à analyser le texte chiffré dans le but d'extraire le filigrane.

15. Appareil selon la revendication 14, le détecteur étant configuré de façon à analyser le texte chiffré grâce à l'identification et au comptage des récurrences de schémas qui se produisent dans le texte chiffré, et grâce au décodage de chacun des symboles dans la chaîne, sur la base d'un comptage respectif des récurrences dans le texte chiffré.
